# EUROPÄISCHE PATENTSCHRIFT

(11) **EP 1 183 578 B1**
(45) Veröffentlichungstag und Bekanntmachung des Hinweises auf die Patenterteilung: **20.08.2003**
(21) Anmeldenummer: 00914056.7
(22) Anmeldetag: 02.03.2000
(51) Int. Cl.: G05B 19/409, G05B 19/418, G05B 23/02

(54) **AUGMENTED-REALITY-SYSTEM ZUR SITUATIONSGERECHTEN UNTERSTÜTZUNG DER INTERAKTION ZWISCHEN EINEM ANWENDER UND EINER TECHNISCHEN VORRICHTUNG**
AUGMENTED REALITY SYSTEM FOR SITUATION-RELATED SUPPORT FOR INTERACTION BETWEEN A USER AND A TECHNICAL DEVICE
SYSTEME A REALITE AMPLIFIEE POUR L'ASSISTANCE CONFORME A LA SITUATION DE L'INTERACTION ENTRE UN UTILISATEUR ET UN DISPOSITIF TECHNIQUE

(30) Priorität: 02.03.1999 DE 19909154; 02.03.1999 DE 19909023; 02.03.1999 DE 19909018; 02.03.1999 DE 19909012; 02.03.1999 DE 19909011; 02.03.1999 DE 19909010; 02.03.1999 DE 19909013; 02.03.1999 DE 19909009; 02.03.1999 DE 19909016
(43) Veröffentlichungstag der Anmeldung: 06.03.2002
(73) Patentinhaber: SIEMENS AKTIENGESELLSCHAFT, 80333 München (DE)
(72) Erfinder: FRIEDRICH, Wolfgang, D-91088 Bubenreuth (DE); WOHLGEMUTH, Wolfgang, D-91058 Erlangen (DE)
(86) Internationale Anmeldenummer: DE0000664
(87) Internationale Veröffentlichungsnummer: WO00052539

(56) Entgegenhaltungen:
- EP-A- 0 145 683
- EP-A- 0 597 127
- DE-A- 4 119 803
- DE-A- 4 127 809
- GB-A- 2 284 074
- GB-A- 2 327 289
- US-A- 5 712 649
- US-A- 5 850 352
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK,DE,SPRINGER VERLAG. BERLIN, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" PROCEEDINGS OF THE CONFERENCE ON HUMAN FACTORS IN COMPUTING SYSTEMS,US,READING, ADDISON WESLEY, Bd. -, 1992, Seiten 533-540, XP000426833

## Beschreibung

Augmented-Reality-System zur situationsgerechten Unterstützung der Interaktion zwischen einem Anwender und einer technischen Vorrichtung

Die Erfindung betrifft ein Augmented-Reality-System zur situationsgerechten Unterstützung der Interaktion zwischen einem Anwender und einer technischen Vorrichtung.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz.

Aus der GB 2 327 289 ist eine Vorrichtung zur Arbeitsunterstützung bekannt, die einem Fließbandarbeiter mittels eines Displays gleichzeitig Instruktionen zur auszuführenden Arbeit und Informationen über Ergebnisse dieser Arbeit visualisiert. Die Arbeitsergebnisse werden durch Messmittel oder durch Eingabe einer spezifischen Teilenummer durch den Arbeiter erfasst, der Arbeitsprozess wird mit Kameras aufgenommen.

Der Erfindung liegt die Aufgabe zugrunde, ein System und ein Verfahren anzugeben, das in konkreten Arbeitssituationen auf einfache und kostengünstige Weise eine schnelle und sichere Unterstützung eines Anwenders ermöglicht.

Diese Aufgabe wird durch ein System bzw. durch ein Verfahren mit den in den Ansprüchen 1 bzw. 6 angegebenen Merkmalen gelöst.

Der Erfindung liegt die Erkenntnis zugrunde, daß der Anwender einer technischen Vorrichtung in der Regel bestimmte Schulungen absolvieren muß, bevor er in der Lage ist, komplexere technische Arbeiten, beispielsweise die Herstellung eines Zwischen- und/oder eines Endprodukts bis hin zur Montage eines Autos auszuführen. Ein prozessoptimierter Einsatz eines derartigen Werkers kann dadurch erzielt werden, daß der Werker durch das Augmented-Reality-System situationsgerecht unterstützt wird. Dabei werden reale Informationen, beispielsweise der Ausgangszustand eines zu fertigenden Teils erfaßt und vom System kontextabhängig hiervon die kommenden Arbeitsfolgen für den Anwender ermittelt und diesem in der mobilen Vorrichtung angezeigt.

Insbesondere bei NC-gesteuerten Anwendungen ergibt sich durch die Möglichkeit zur Einblendung von Simulationsdaten eine weitere zusätzliche Unterstützung für den Anwender/ Werker/Arbeiter. Mit Hilfe des Augmented Reality-Systems können dabei reale Information mit rechnergenerierten Visualisierungen auf Basis von Simulationsdaten überlagert werden. Durch die Überlagerung von realer Information mit rechnergenerierten Visualisierungen auf Basis von Simualtionsdaten ergibt sich eine Unterstützung der Einrichtung von NC-gesteuerten Prozessen / Anwendungen.

Vorteilhafte Ausgestaltungen bestehen darin, daß die Dokumentationsdaten statische und/oder dynamische Informationsdaten sind. Beispiele für derartige statische Informationen sind technische Daten aus Handbüchern, Explosionszeichnungen, Wartungsanweisungen etc.. Beispiele für dynamische Informationen sind Prozeßwerte wie Temperatur, Druck, Signale etc.

Ein schneller situationsgerechter Zugang zu den Dokumentationsdaten wird dadurch weiter unterstützt, daß die Erfassungsmittel eine Bildaufnahmevorrichtung aufweisen, daß die Auswertemittel zur Auswertung der realen Information in der Weise vorgesehen sind, daß aus der realen Information ein Eisatzkontext, insbesondere ein Objekt der Dokumentationsdaten ermittelt wird und daß das System Visualisierungsmittel zur Visualisierung der Dokumentationsdaten aufweist.

Ein schneller situationsgerechter Zugang zu den Dokumentationsdaten wird dadurch weiter unterstützt, daß die Erfassungsmittel anwendergesteuert sind und insbesondere als sprachgesteuerte Erfassungsmittel und/oder durch Steuerdaten gesteuerte Erfassungsmittel ausgebildet sind.

Ein für viele Anwendungsfälle optimaler Einsatz von Augmented-Reality-Techniken auf Basis der statischen und/oder dynamischen Dokumentations- und/oder Prozeßdaten kann in der Weise erfolgen, daß die Erfassungsmittel und/oder die Visualisierungsmittel als Datenbrille ausgebildet sind.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Augmented-Reality-Systems,
- FIG 2: ein weiteres Blockschaltbild eines Ausführungsbeispiels eines Augmented-Reality-Systems und
- FIG 3: ein Anwendungsbeispiel für einen situationsgerechten Zugriff auf Expertenwissen und/oder Dokumentationsdaten.

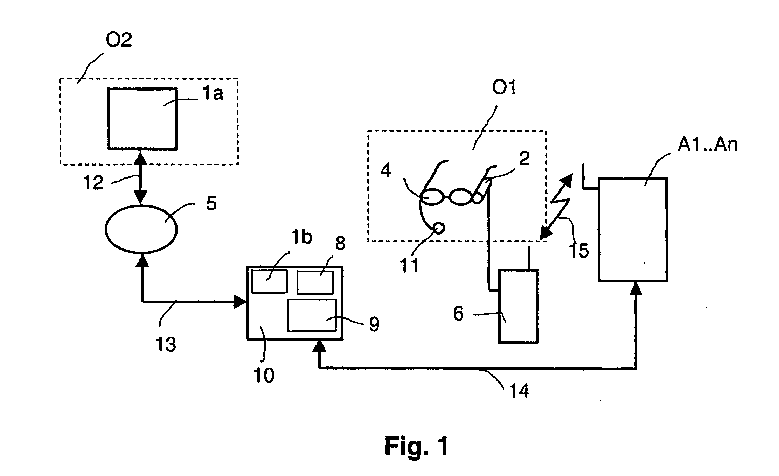

Figur 1 zeigt eine Prinzipdarstellung eines Augmented-Reality-Systems zur Übertragung von ersten Informationsdaten von einem ersten Ort 01 an einen entfernten zweiten Ort 02 eines Experten für eine Unterstützung eines Anwenders am ersten Ort O1 beispielsweise im Service- und/oder Reparaturfall durch den entfernten Experten am zweiten Ort. Der Anwender, der in Figur 1 nicht explizit dargestellt ist, ist mit mobilen Geräten 4, 6 ausgestattet. Die mobilen Geräte 4, 6 beinhalten eine Datenbrille 4, an der eine Videokamera 2 sowie ein Mikrofon 11 angeordnet ist. Die Datenbrille ist mit einer Einrichtung zur drahtlosen Kommunikation, beispielsweise einer Funk-Sende-Empfangsvorrichtung 6 gekoppelt, die über eine Funkschnittstelle 15 mit dem Automatisierungssystem A1..An kommunizieren kann. Das Automatisierungssystem A1..An ist über eine Datenverbindung 14 mit einem Augmented-Reality-System 10 koppelbar, welches im folgenden auch abkürzend als AR-System bezeichnet wird. Das AR-System enthält ein Informationsmodul 1b zur Speicherung bzw. zum Zugriff von bzw. auf Informationsdaten, ein AR-Basismodul 8 sowie ein AR-Anwendungsmodul 9. Das AR-System 10 ist über eine Datenverbindung 13 mit dem Internet 5 verbindbar, wobei über eine beispielhaft dargestellte Internetverbindung 12 ein Zugriff auf weitere Speicher- und Dokumentationsdaten 1a möglich ist.

Der Anwender, der mit der Datenbrille 4 und der mobilen Funk-Sende-Einrichtung 7 ausgestattet ist, ist in der Lage, sich für Wartungs- und Servicezwecke in der Anlage A1..An frei zu bewegen. Ist beispielsweise die Wartung oder Reparatur einer bestimmten Teilkomponente der Anlagen A1..An erforderlich, so wird mit Hilfe der Kamera 2 der Datenbrille 4 gegebenenfalls gesteuert durch Sprachkommandos, die vom Mikrofon 11 erfaßt werden, ein entsprechender Zugang zu den relevanten Dokumentationsdaten 1a, 1b hergestellt. Hierzu wird über die Funkschnittstelle 15 eine Datenverbindung zur Anlage A1..An oder einem entsprechenden Funk-Sende-Modul aufgebaut und die Daten an das AR-System 10 übermittelt. Im AR-System erfolgt eine situationsgerechte Auswertung der vom Anwender erhaltenen Daten und ein automatischer oder auch ein interaktiv vom Anwender gesteuerter Zugriff auf Inforamtionsdaten 1a, 1b. Die ermittelten relevanten Dokumentationsdaten 1a, 1b, werden über die Datenverbindungen 14, 15 an die Funk-Sende-Einrichtung 6 übermittelt und insgesamt erfolgt auf Basis der erfaßten Arbeitssituation somit eine Analyse, die Grundlage für die Auswahl von Daten aus der vorliegenden statischen Information ist. Hierdurch ergibt sich eine situationsgerechte, objektorientierte bzw. bauteilorientierte Auswahl relevanten Wissens aus den aktuellsten Datenquellen 1a, 1b. Die Anzeige der Information erfolgt mit Hilfe der jeweils verwendeten Visualisierungskomponente, beispielsweise einem Handheld-PC oder einer Datenbrille. Von AR-basierten Technologien gesprochen wird. Der Anwender vor Ort wird somit lediglich mit der Information versorgt, die er braucht. Diese Information befindet sich jeweils auf dem aktuellsten Stand. Der Servicetechniker wird beispielsweise nicht durch ein "100 Seiten-Manual" mit Informationen überfrachtet.

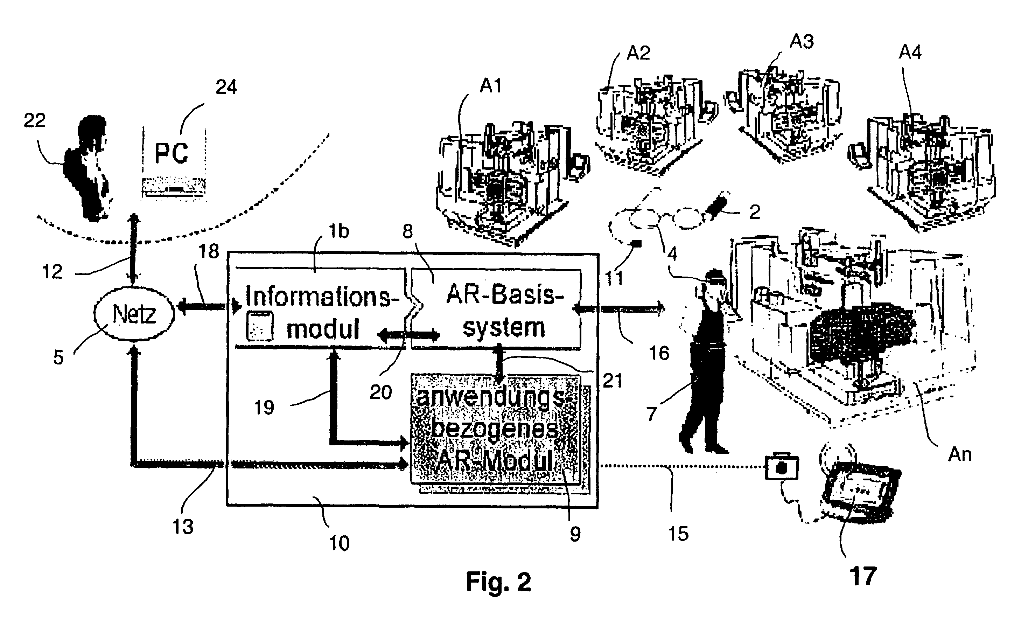

Figur 2 zeigt ein weiteres Anwendungsbeispiel eines Systems zur Dokumentationsverarbeitung für Service und Wartung. Das System besteht aus einem Augmented-Reality-System 10, welches ein Informationsmodul 1b zur Speicherung von Informationsdaten, ein AR-Basissystem 8 sowie ein AR-Anwendungsmodul 9 enthält. Das AR-System 10 ist über Bindungsleitungen 13, 18 ans Internet 5 ankoppelbar. Von dort besteht über eine beispielhafte Datenverbindung 12 eine Verbindungsmöglichkeit zu einem entfernten PC 16 mit einem entfernten Experten 22. Die Kopplung zwischen den einzelnen Modulen des AR-Systems 10 erfolgt über Verbindungen 19, 20, 21. Die Anwenderkommunikation zwischen einem Anwender 7 und dem AR-System erfolgt über Schnittstellen 8, 23. Hierzu ist das AR-System mit einer Sende-Empfangs-Vorrichtung koppelbar, die eine bidirektionale Datenkommunikation zwischen dem AR-System 10 und dem Anwender 7 über eine Datenbrille 4 entweder direkt über die Schnittstelle 8 oder über ein im Bereich des Anwenders 7 angeordnete Funk-Sende-Empfangseinrichtung 17 über eine Schnittstelle 23 ermöglicht. Die Verbindung 23 kann über eine separate Datenverbindung oder über das Stromnetz als "Power-Line"-Modem realisiert werden. Die Datenbrille 4 enthält neben einer im Bereich der Brillengläser angeordneten Anzeigevorrichtung eine Bilderfassungsvorrichtung 2 in Form einer Kamera sowie ein Mikrofon 11. Der Anwender 7 kann sich mit Hilfe der Datenbrille 4 im Bereich der Anlagen A1..An bewegen und Serviceoder Wartungsarbeiten durchführen.

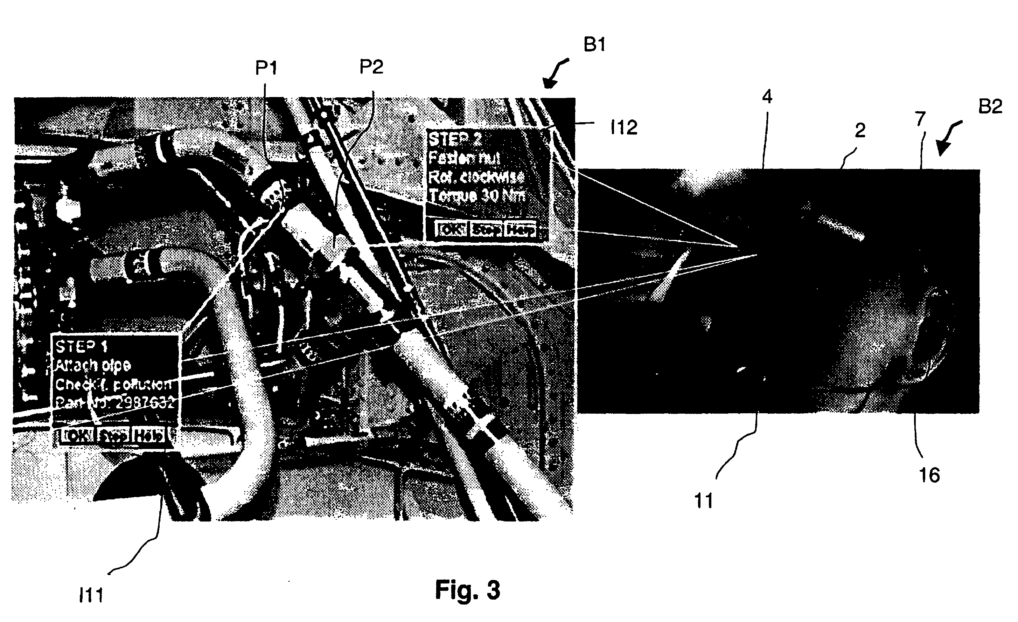

Mit Hilfe der Datenbrille 4 und der entsprechenden Funk-Sende-Empfangsvorrichtungen, beispielsweise er Funk-Sende-Empfangsvorrichtung 17, die vom Personal direkt am Körper getragen wird, ist es möglich vorbeugende Funktionalität zu erreichen: Zunachst erfolgt die Erfassung der jeweiligen Arbeitssituation, beispielsweise durch die Kamera 2 oder durch Lokalisierung durch das Personal 7. Auf Basis der erfaßten Arbeitsssituation erfolgt im AR-System eine Auswahl von Daten gewarteten Anlage A1..An. Der grundlegende Vorteil des in Figur 3 dargestellten Systems besteht darin, daß dieses System das Zusammenwirken der einzelnen Einzelfunktionalitäten anwendungsgerecht unterstützt: So wird zunächst eine konkrete Arbeitssituation automatisch erfaßt, diese Arbeitssituation anschließend analysiert, wobei aus der aktuellsten, vorliegenden statischen Information in Kombination mit den augenblicklich erfaßten dynamischen Daten automatisch die gerade relevanten Aspekte ermittelt werden. Hierdurch werden beispielsweise Montagehinweise mit aktuellen Prozeßdaten korreliert. Das Personal 7 erhält hierdurch eine situationsgerechte Anzeige der relevanten Informationen beispielsweise durch eine überlagerte Visualisierung der entsprechenden Daten in der Weise, daß im Sichtfeld des Personals die reale Arbeitssituation um die ermittelten Informationen erweitert wird. Hierdurch wird das Personal 7 in kürzester Zeit handlungsfähig gemacht und damit notwendige Maschinenlaufzeiten gesichert. Unterstützung kann der Wartungstechniker 7 vor Ort auch über den entfernten Experten 22 und das am Ort des entfernten Experten 22 vorliegende Wissen 16 erhalten.

Figur 3 zeigt ein Anwendungsbeispiel für einen situationsgerechten Zugriff auf Dokumentationsdaten. Figur 3 zeigt einen ersten Bildschirmbereich B1, in dem eine Anlagenkomponente dargestellt ist. Im rechten Bildschirmbereich B2 ist ein Anwender 7 dargestellt, der beispielsweise eine einzelne Anlagenkomponente betrachtet. Der Anwender 7 ist mit einer Datenbrille 4 augerüstet, die eine Kamera 2 als Erfassungsmittel enthält. An der Datenbrille 4 ist darüber hinaus ein Mikrofon 11 sowie ein Lautsprecher 16 angeordnet. Im linken Bildschirmbereicht B1 ist ein Blick auf Rohrleitungen dargestellt, die mit der im Bildfenster B2 dargestellten Datenbrille betrachtet werden können. Im linken Bildschirmbereich B1 sind zwei Punkte B1, B2 markiert, die jeweils zwei mit Hilfe der Datenbrille 4 betrachtete Bildausschnitte repräsentieren. Nach Betrachtung des ersten Punkts P1, d.h. nach Betrachtung der im Bereich des Punktes P1 angeordneten Rohrleitung werden dem Anwender 7 Zusatzinformationen in der Datenbrille 4 visualisiert. Diese Zusatzinformationen 11 bestehen aus Dokumentationsdaten, die bezüglich des ersten Punktes P1 Arbeitsanweisungen für dieses Rohrstück enthalten und bezüglich des Punktes P2 die in einem zweiten Schritt durchzuführende Installationsanweisung beinhalten. Die Installationsanweisung besteht in diesem Fall darin, daß dem Anwender 7 das Drehmoment und die Drehrichtung der Schraubverbindung des Punktes P2 über die Visualisierung der Zusatzdaten I12 mitgeteilt werden. Der Anwender 7 erhält somit innerhalb kürzester Zeit eine situationsgerechte Anweisung für das betrachtete Objekt. Bei der Verwendung eines intelligenten Werkzeugs, welches in der Lage ist, das gerade eingesetzte Drehmoment zu erfassen, ist es weiterhin möglich, daß der Anwender basierend auf dem aktuellen Drehmoment auch dazu aufgefordert wird, daß Drehmoment entsprechend zu erhöhen oder zu verringern.

Im folgenden werden Hintergrundinformationen zu Einsatzgebiet der Erfindung gegeben: Es geht dabei um eine anwendungsorientierte Anforderungsanalyse und Entwicklung von AR-basierten Systemen zur Unterstützung von Arbeitsprozessen in Entwicklung, Produktion und Service komplexer technischer Produkte und Anlagen in der Fertigungs- und Verfahrenstechnik, sowie für Systeme zur Serviceunterstützung wie bei Kraftfahrzeugen oder für die Wartung beliebiger technischer Geräte.

Augmented Reality, kurz AR, ist eine neue Art der Mensch-Technik-Interaktion mit großem Potential zur Unterstützung von industriellen Arbeitsprozessen. Bei dieser Technologie wird das Sichtfeld des Betrachters mit rechnergenerierten virtuellen Objekten angereichert, so daß Produkt- bzw. Prozeßinformationen intuitiv genutzt werden können. Neben der sehr einfachen Interaktion erschließt der Einsatz tragbarer Computer AR-Anwendungsfelder mit hohen Mobilitätsanforderungen, wenn beispielsweise Prozeß-, Meß- oder Simulationsdaten an das reale Objekt geknüpft werden.

Die Situation der deutschen Industrie ist durch steigende Kundenanforderungen an Individualität und Qualität der Produkte sowie durch eine wesentliche Zeitverkürzung der Entstehungsprozesse gekennzeichnet. Insbesondere in Entwicklung, Produktion und Service komplexer technischer Produkte und Anlagen können mit innovativen Lösungen für die Mensch-Technik-Interaktion sowohl Effizienz- und Produktivitätssprünge erzielt werden, als auch die Arbeit kompetenz- und lernförderlich gestaltet werden, indem der Wissens- und Informationsbedarf der Benutzer auf der Basis ohnehin vorliegender Daten situationsgerecht unterstützt wird.

Augmented Reality ist eine Technologie mit einer Vielzahl innovativer Anwendungsfelder:
- So kann z.B. in der **Entwicklung** ein "Mixed Mock-Up"-Ansatz auf der Grundlage einer gemischt-virtuellen Umgebung die frühen Entwicklungsphasen deutlich beschleunigen. Gegenüber immersiven, d.h. eintauchenden, "Virtual Reality"-(VR)-Lösungen besteht für den Benutzer ein wesentlicher Vorteil darin, daß die haptischen Eigenschaften mit Hilfe eines realen Modells naturgetreu abgebildet werden können, hingegen Aspekte der visuellen Wahrnehmung, z.B. für Anzeigenvarianten, virtuell manipulierbar sind. Darüber hinaus besteht ein großes Potential zur benutzerorientierten Validierung rechnergestützter Modelle, z.B. für die Bauteilverifikation oder bei Crash-Tests.
- In der flexiblen **Produktion** kann unter anderem das Einrichten von Maschinen für qualifizierte Facharbeiter wesentlich erleichtert werden, indem, z.B. durch mobile AR-Komponenten, gemischt-virtuelle Spannsituationen direkt im Sichtfeld wiedergegeben werden. Eine facharbeitergerechte Fertigungsplanung und Fertigungssteuerung in der Werkstatt wird erleichtert, wenn Informationen über den jeweiligen Auftragsstatus direkt in Verbindung mit den dazugehörigen Produkten vor Ort wahrgenommen werden. Das gleiche gilt auch für die Montage, wobei dem Monteur bereits in der Trainingsphase die einzelnen Arbeitsschritte gemischt-virtuell präsentierbar sind. In diesem Zusammenhang können, z.B. durch den Vergleich realer Montageabläufe mit Simulationsergebnissen, umfassende Optimierungen erreicht werden, die sowohl die Qualität der Arbeitsplanung verbessern als auch den Montageprozeß in der kritischen Anlaufphase vereinfachen und beschleunigen.
- Letztlich genügen im **Service** herkömmliche Technologien kaum mehr, um die komplexen Diagnose- und Behebungsprozeduren zu unterstützen und zu dokumentieren. Da diese Prozesse in vielen Bereichen aber ohnehin auf Basis von digitalen Daten geplant werden, bieten AR-Technologien die Möglichkeit, die Informationsquellen für die Wartung zu übernehmen und einem Techniker, z.B. in der Datenbrille, durch die Überlagerung mit realen Objekten den Ausbauvorgang zu erläutern. Mit Bezug auf kooperative Arbeit ermöglicht das AR-gestützte "Fernauge" eine verteilte Problemlösung, indem ein entfernter Experte mit dem Mitarbeiter vor Ort über globale Distanzen hinweg kommuniziert. Dieser Fall ist besonders für die überwiegend mittelständischen Werkzeugmaschinenhersteller relevant. Sie sind durch die Globalisierung gezwungen, Produktionsstätten ihrer Kunden weltweit zu errichten. Jedoch ist eine Präsenz von Niederlassungen in allen wichtigen Märkten weder aus wirtschaftlichen Gründen realisierbar, noch kann auf das profunde Wissen erfahrener Service-Mitarbeiter des Stammhauses bzgl. der zunehmend komplexer werdenden Anlagen verzichtet werden.

Die Besonderheit in der Mensch-Technik-Interaktion bei Augmented Reality liegt in einer sehr einfachen und intuitiven Kommunikation mit dem Computer, beispielsweise ergänzt durch multimodale Interaktionstechniken wie Sprachverarbeitung oder Gestikerkennung. Die Verwendung von tragbaren Computereinheiten ermöglicht darüber hinaus völlig neue mobile Nutzungsszenarien, wobei die spezifischen Daten jederzeit über ein drahtloses Netz angefordert werden können. Neue Visualisierungstechniken erlauben eine direkte Annotation, z.B. von Meß- oder Simulationsdaten, an das reale Objekt oder in die reale Umgebung. In Verbindung mit verteilten Anwendungen sind mehrere Benutzer in der Lage, in einer realen Umgebung mit Hilfe einer gemeinsamen Datenbasis zu arbeiten (shared augmented environments) oder in verschiedenen Umgebungen ARgestützt zu kooperieren.

Augmented Reality wird erst seit wenigen Jahren intensiv erforscht. Deshalb finden sich sowohl auf nationaler als auch internationaler Ebene nur wenige Anwendungen, zumeist in Form von wissenschaftlichen Prototypen bei Forschungseinrichtungen.
- *USA:* Wie bei vielen neuen Technologien wurden die Nutzungspotentiale von Augmented Reality zuerst in Nordamerika erschlossen. Beispiele sind die Cockpitgestaltung oder die Wartung von mechatronischen Geräten. Der Flugzeughersteller Boeing hat bereits erste Feldversuche im Bereich der Montage mit AR-Technologien unternommen. Ergebnis ist, daß den USA auch in diesem Hightech-Bereich eine Schlüsselstellung zukommt, die mit einer möglichen Technologieführerschaft einhergeht.
- *Japan:* In Japan werden verschiedene AR-Entwicklungen vorangetrieben, z.B. zur gemischt-virtuellen Gebäudeplanung, Telepräsenz oder "Cyber-Shopping". Keimzelle ist das 1997 gegründete Mixed Reality Systems Laboratory, das als Kompetenzzentrum gemeinsam von Wirtschaft und Wissenschaft getragen wird. Besondere Impulse im Konsumgüterbereich sind zukünftig durch die japanische Industrie für Unterhaltungselektronik zu erwarten.
- *Europa:* In Europa sind bislang nur sehr wenige Forschergruppen im AR-Bereich tätig. Eine Gruppe an der Universität Wien befaßt sich mit Ansätzen für die gemischt-reale Visualisierung. Die Gruppe des IGD hat im Rahmen des inzwischen ausgelaufenen ACTS-Projektes CICC erste Anwendungen für die Bauindustrie und einen wissenschaftlichen Prototypen zur Mitarbeiterschulung im Automobilbau entwickelt.

Die im Erfindung versteht sich insbesondere im speziellen Kontext der Anwendungsfelder "Produktions- und Werkzeugmaschinen" (NC-gesteuerte, automatisierungstechnische Prozesse) sowie "Diagnose-/Serviceunterstützungssysteme für komplexe technische Komponenten/Geräte/Systeme" (z.B. Fahrzeuge, aber auch industrielle Maschinen und Anlagen).

Die Reihenfolge der Arbeitsschritte wird durch eine "geeignete" Umgebungs- und Situationswahrnehmung verbessert. Die jeweilige Kombination aus Arbeitsumgebung, Prozeßsituation, Fortschritt der Tätigkeit und Wissen des Personals wird ausgenutzt, um die nächste Abfolge von Hinweisen zu relativieren

Die Grundidee liegt in einem Kontextabhängigen Einblenden von Montagehinweisen mit prozessoptimierter Vergabe der notwendigen Arbeitsschritte. Die denkbare Optimierung ist parametrierbar z.B. hinsichtlich bestimmten Ressourceneinsatzes (Zeit, Material, Kosten, ...).

Zusammenfassend betrifft die Erfindung somit ein Augmented-Reality-System mit einer mobilen Vorrichtung zum kontextabhängigen Einblenden von Montagehinweisen. Durch das kontextabhängige Einblenden von Montagehinweisen mit prozessoptimierter Vorgabe der notwendigen Arbeitsschritte ergibt sich eine situationsgerechte Unterstützung durch von Arbeitsfolgen. Zusätzlich können beispielsweise in Abhängigkeit bestimmter Montageschritte etc., d.h. bei einem fest vorgegebenen Montageablauf weitere die jeweilige Arbeitssituation betreffende Zusatzhinweise dem Anwender eingeblendet werden. So können beispielsweise vorbeugende Wartungshinweise etc. kontextabhängig zeit- und prozess- optimiert gegeben werden.

## Patentansprüche

1. System zur situationsgerechten Unterstützung der Interaktion zwischen einem Anwender (1) und einer technischen Vorrichtung (A1..An) mit Erfassungsmitteln zur Erfassung von realen Informationen und mit mindestens einer Kamera zur Erfassung einer Arbeitssituation und mit Mitteln zur Analyse der Arbeitssituation auf Basis von vorliegenden statischen Informationen in Kombination mit den erfassten Informationen und mit Mitteln zur kontextabhängigen Bestimmung von Arbeitsfolgen des Anwenders (1) und mit einer mobilen Vorrichtung (4) zum kontextabhängigen Einblenden der Arbeitsfolgen.

2. System nach Anspruch 1,
**dadurch gekennzeichnet, dass** das System Mittel zur prozessoptimierten Vergabe der Arbeitsschritte aufweist.

3. System nach einem der Ansprüche 1 oder 2,
**dadurch gekennzeichnet, dass** die Erfassungsmittel (2, 11) eine Bildaufnahmevorrichtung zur Erfassung der realen Informationen sowie Visualisierungsmittel (4) zur Visualisierung von Informationsdaten aufweist.

4. System nach einem der Ansprüche 1 bis 3,
**dadurch gekennzeichnet, dass** die Erfassungsmittel (2) anwendergesteuert sind.

5. System nach einem der Ansprüche 3 bis 4,
**dadurch gekennzeichnet, dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

6. Verfahren zur situationsgerechten Unterstützung der Interaktion zwischen einem Anwender (1) und einer technischen Vorrichtung (A1..An) in einem System bei dem reale Informationen und mit mindestens einer Kamera eine Arbeitssituation erfasst werden und bei dem die Arbeitssituation auf Basis von vorliegenden statischen Informationen in Kombination mit den erfassten Informationen analysiert wird und hieraus kontextabhängige Arbeitsfolgen des Anwenders (1) bestimmt werden und dem Anwender auf einer mobilen Vorrichtung (4) kontextabhängige Arbeitsfolgen eingeblendet werden.

7. Verfahren nach Anspruch 6,
**dadurch gekennzeichnet, dass** eine prozessoptimierte Vergabe der Arbeitsschritte vorgesehen ist.

8. Verfahren nach einem der Ansprüche 6 oder 7,
**dadurch gekennzeichnet, dass** die realen Informationen mittels Erfassungsmitteln (2, 11) mit einer Bildaufnahmevorrichtung erfasst und dass Informationsdaten mittels Visualisierungsmitteln (4) dem Anwender (7) visualisiert werden.

9. Verfahren nach Anspruch 8,
**dadurch gekennzeichnet, dass** die Erfassungsmittel (2) anwendergesteuert sind.

10. Verfahren nach einem der Ansprüche 8 bis 9,
**dadurch gekennzeichnet, dass** die Visualisierungsmittel (4) als im Bereich von Brillengläsern einer Datenbrille angeordnete Anzeigevorrichtungen ausgebildet sind, dass als Erfassungsmittel (2) eine an der Datenbrille angeordnete Bilderfassungsvorrichtung vorgesehen ist und dass zur Erfassung von Sprachkommandos ein an der Datenbrille angeordnetes Mikrofon (11) vorgesehen ist.

## Claims

1. System for situation-related support of the interaction between a user (1) and an engineering apparatus (A1..An) with recording means for recording real information and with at least one camera to record an operating situation and with means for analysing the operating situation on the basis of available static information in combination with the recorded information and with means for the context-dependent determination of work sequences of the user (1) and with a mobile apparatus (4) for the context-dependent display of the work sequences.

2. System according to Claim 1, **characterised in that** the system has means for the process-optimised allocation of the work steps.

3. System according to one of Claims 1 or 2, **characterised in that** the recording means (2, 11) have an image-sensing apparatus for recording the real information and also visualisation means (4) for visualising information data.

4. System according to Claims 1 to 3, **characterised in that** the recording means (2) are user-controlled.

5. System according to one of Claims 3 to 4, **characterised in that** the visualisation means (4) are formed as display apparatuses arranged in the area of goggle lenses of goggles, that an image-sensing apparatus arranged on the data goggles is provided as a recording means (2) and that a microphone (11) arranged on the data goggles is provided for recording voice commands.

6. Method for situation-related support of the interaction between a user (1) and an engineering apparatus (A1..An) in a system in which real information and, with at least one camera, an operating situation are recorded and in which the operating situation is analysed on the basis of available static information in combination with the recorded information and context-dependent work sequences of the user (1) are determined therefrom and context-dependent work sequences are displayed to the user on a mobile apparatus (4).

7. Method according to Claim 6, **characterised in that** a process-optimised allocation of the work steps is provided.

8. Method according to one of Claims 6 or 7, **characterised in that** the real information is recorded by means of recording means (2, 11) with an image-sensing apparatus and that information data is visualised to the user (7) by means of visualisation means (4).

9. Method according to Claim 8, **characterised in that** the recording means (2) are user-controlled.

10. Method according to one of Claims 8 to 9, **characterised in that** the visualisation means (4) are formed as display apparatuses arranged in the area of goggle lenses of goggles, that an image-sensing apparatus arranged on the data goggles is provided as a recording means (2) and that a microphone (11) arranged on the data goggles is provided for recording voice commands.

## Revendications

1. Système pour l'assistance, convenant à la situation, de l'interaction entre un utilisateur (1) et un dispositif technique (A1 à An), avec des moyens d'acquisition pour acquérir des informations réelles, avec au moins une caméra pour acquérir une situation de travail, avec des moyens pour analyser la situation de travail sur la base d'informations statiques présentes en combinaison avec les informations acquises, avec des moyens pour déterminer en fonction du contexte des séquences de travail de l'utilisateur (1) et avec un dispositif mobile (4) pour insérer des séquences de travail en fonction du contexte.

2. Système selon la revendication 1, **caractérisé par le fait que** le système comporte des moyens pour prescrire, avec optimisation du processus, les étapes de travail.

3. Système selon l'une des revendications 1 ou 2, **caractérisé par le fait que** les moyens d'acquisition (2, 11) comportent un dispositif d'enregistrement d'image pour acquérir les informations réelles ainsi que des moyens de visualisation (4) pour visualiser des données d'information.

4. Système selon l'une des revendications 1 à 3, **caractérisé par le fait que** les moyens d'acquisition (2) sont commandés par l'utilisateur.

5. Système selon l'une des revendications 3 à 4, **caractérisé par le fait que** les moyens de visualisation (4) sont conçus comme des dispositifs d'affichage agencés dans la zone des verres de lunettes de données, qu'il est prévu comme moyen d'acquisition (2) un dispositif d'enregistrement d'image agencé sur les lunettes de données et qu'il est prévu un microphone (11) agencé sur les lunettes de données pour détecter des commandes vocales.

6. Procédé pour l'assistance, convenant à la situation, de l'interaction entre un utilisateur (1) et un dispositif technique (A1 à An) dans un système dans lequel on acquiert des informations réelles et, avec au moins une caméra, une situation de travail et dans lequel on analyse la situation de travail sur la base d'informations statiques présentes en combinaison avec les informations acquises et on détermine à partir de là des séquences de travail dépendantes du contexte pour l'utilisateur (1) et on insère des séquences de travail dépendantes du contexte sur un dispositif mobile (4) pour l'utilisateur.

7. Procédé selon la revendication 6, **caractérisé par le fait qu'**il est prévu une prescription, avec optimisation du processus, des étapes de travail.

8. Procédé selon l'une des revendications 6 ou 7, **caractérisé par le fait qu'**on acquiert les informations réelles à l'aide de moyens d'acquisition (2, 11) comportant un dispositif d'enregistrement d'image et qu'on visualise des données d'information à l'aide de moyens de visualisation (4) pour l'utilisateur (7).

9. Procédé selon la revendication 8, **caractérisé par le fait que** les moyens d'acquisition (2) sont commandés par l'utilisateur.

10. Procédé selon l'une des revendications 8 à 9, **caractérisé par le fait que** les moyens de visualisation (4) sont conçus comme des dispositifs d'affichage agencés dans la zone des verres de lunettes de données, qu'il est prévu comme moyen d'acquisition (2) un dispositif d'enregistrement d'image agencé sur les lunettes de données et qu'il est prévu un microphone (11) agencé sur les lunettes de données pour détecter des commandes vocales.
